# EUROPEAN PATENT APPLICATION

(11) **EP 3 845 355 A1**
(43) Date of publication of application: **07.07.2021**
(21) Application number: 19220256.2
(22) Date of filing: 31.12.2019
(51) Int. Cl.: B29B 15/12

(54) **RESIN-TREATED SPREADED FIBER LAYERS AND METHODS FOR MAKING RESIN-TREATED SPREADED FIBER LAYERS**

(71) Applicant: SABIC Global Technologies B.V., 4612 PX Bergen op Zoom (NL)
(72) Inventor: KOURKOUTSAKI, Theodosia, 4612 PX Bergen op Zoom (NL); VANDORMAEL, Bart, 4612 PX Bergen op Zoom (NL); GELEBART, Anne-Helene, 4612 PX Bergen op Zoom (NL); VERGHESE, Nikhil, 4612 PX Bergen op Zoom (NL); POWALE, Lakshmikant Suryakant, 4612 PX Bergen op Zoom (NL)
(74) Representative: J A Kemp LLP

(57) **Abstract**

Disclosed is a method for producing a resin-treated spreaded fiber layer (218), the method including spreading one or more fiber bundles (210) into a spreaded fiber layer (212), applying a powdered binder resin to at least a portion of a surface of the spreaded fiber layer, and at least partially melting at least a portion of the powdered binder resin present on the surface of the spreaded fiber layer to produce the resin-treated spreaded fiber layer.

## Description

### CROSS-REFERENCE TO RELATED APPLICATIONS

None

### BACKGROUND

### 1. Field of Invention

The present invention generally relates to resin-treated spreaded fiber layers, unidirectional fiber tapes ("UD tapes") made from such layers, and methods and systems for producing such layers. In one aspect, the invention can include a method for producing a resin-treated stabilized fiber layer by spreading one or more fiber bundles into a spreaded fiber layer, applying a powdered binder resin to at least a portion of a surface of the spreaded fiber layer, and at least partially melting at least a portion of the powdered binder resin present on the surface of the spreaded fiber layer to produce the resin-treated spreaded fiber layer.

### 2. Description of Related Art

Fiber composites such as unidirectional fiber tapes ("UD tapes") can be used to make structures having advantageous structural characteristics, such as high stiffness and high strength, as well as low weight, when compared to structures formed from conventional materials. As a result, UD tapes are used in a variety of applications across a wide range of industries, including the automotive, aerospace, and consumer electronics industries. Depending on its application, a UD tape may need to meet a number of criteria, including those relating to strength, stiffness, size, weight, and/or the like. Fiber composites with high stiffness, high strength and low weight also have use in electronic and electrical devices such as notebook personal computers, e-books, and tablet personal computers, where metallic body panels are being replaced by materials that are lighter in weight but offer a robust combination of mechanical properties.

Challenges associated with conventional UD tape production techniques may render them unable to produce a UD tape that meets the desired criteria. For example, conventional methods for producing UD tapes, such as impregnation methods (see, e.g., EP3418018A1), can result in relatively greater number of fiber breakage and fuzz formation. Fiber breakage and fuzz formation can reduce mechanical performance of the tape and negatively influence aesthetic appeal of the tape.

### SUMMARY

A solution to at least one or more of the deficiencies noted above has been discovered. In particular, processing techniques have been discovered that can allow for consistent and scalable production of a UD tape that has certain properties, such as relatively high coefficient of friction (COF) between the fibers, relatively less number of fiber breakage per fiber per meter, and/or relatively lesser amount of fuzz formation per gram of UD tape. The UD tape can also have a uniform density and/or a high fiber volume fraction. Such processing techniques can include stabilizing a spreaded fiber layer by treating the fiber layer with a resin powder and producing a UD tape from the resin-treated stabilized spreaded fiber layer.

One aspect of the present invention is directed to a method for producing a resin-treated spreaded fiber layer. The method can include, spreading one or more fiber bundles such as rovings into a spreaded fiber layer, applying a powdered binder resin to at least a portion of a surface of the spreaded fiber layer, at least partially melting at least a portion of the powdered binder resin present on the surface of the spreaded fiber layer to produce the resin-treated spreaded fiber layer, and optionally cooling the resin-treated spreaded fiber layer. The spreaded fiber layer can have at least two surfaces (e.g., a top surface and a bottom surface opposite to the top surface), and the powdered binder resin can be applied to at least a portion of one or both surfaces. The resin-treated spreaded fiber layer can contain fibers coated such as superficially coated with the binder resin. In some aspects, the process for making the resin-treated spreaded fiber layer does not include completely immersing the spreaded fiber layer in a powdered resin containing composition.

The powdered binder resin can include binder resin powder particles with a size of D50 5 µm to 100 µm. In some aspects, the powdered binder resin can include binder resin powder particles with D50 20 µm to 90 µm. The binder resin can contain a polymer such as polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. The binder resin preferably can contain PC, PBT, a copolymer thereof, or a blend thereof. In some aspects, the PC polymer can be a recycled polymer. In some aspects, the PC polymer, such as the recycled PC polymer can be a post-consumer recycled (PCR) PC polymer. In some aspects, the recycled PC polymer can have a PCR content 5 wt. % to 90 wt. %. In some aspects, the PBT polymer can be a recycled polymer. In some aspects, the PBT polymer, such as the recycled PBT polymer can be a post-consumer recycled (PCR) PBT polymer. In some aspects, the recycled PBT polymer can have a PCR content 5 wt. % to 90 wt. %. In some aspects, the recycled PBT polymer can be obtained from recycling a PET polymer. In some aspects, the binder resin in addition to the polymer can contain an additive such as a coupling agent, a heat stabilizer such as an antioxidant, an impact modifier, a processing aid, a pigment, an IR absorber such as a near IR (NIR) absorber, a heat activated adhesive, LaB₆, tungsten oxide, a tungstate or any combination thereof. In some aspects, the binder resin can contain 5 wt. % to 98 wt. % of the polymer, such as PC polymer, PBT polymer, a blend thereof, or a combination thereof. In some aspects, the one or more fiber bundles can contain continuous fibers. In some aspects, the one or more fiber bundles can contain carbon fibers, glass fibers, aramid fibers, polyethylene fibers, polyamide fibers, basalt fibers, steel fibers, or any combination thereof. In some aspects, the one or more fiber bundles can contain continuous fibers, such as continuous carbon fibers, continuous glass fibers, continuous aramid fibers, continuous polyethylene fibers, continuous polyamide fibers, continuous basalt fibers, continuous steel fibers, or any combination thereof. The one or more fiber bundles can preferably contain carbon fibers such as continuous carbon fibers and/or glass fibers such as continuous glass fibers. In some aspects, the resin-treated spreaded fiber layer can contain 5 to 25 wt. % of the binder resin. In some aspects, the resin-treated spreaded fiber layer can contain 5 to 25 wt. % of the binder resin polymer. The one or more fiber bundles can be spread by air and/or mechanically. The one or more fiber bundles can be spread mechanically at least by passing and/or pulling the one or more fiber bundles over and/or under one or more spreading elements, wherein at least a portion of an outer surface of the one or more spreading elements contacts the one or more fiber bundles. In some aspects, the one or more spreading elements can be cylindrical in shape and a curved outer surface of the one or more spreading elements can contact the one or more fiber bundles. In some aspects, the one or more spreading elements can be vibrated. In some aspects, the one or more spreading elements can be vibrated at an amplitude 0.1 mm to 20 mm and a frequency 0.1 Hz to 5 Hz. In some aspects, the one or more spreading elements can be heated. In some particular aspects, the one or more spreading elements can be heated at a temperature 80 °C to 200 °C. The one or more fiber bundles can be spread by air at least by passing air through the one or more fiber bundles, where air flow separates the fibers. The one or more fiber bundles can be spread mechanically and by air at least by passing and/or pulling the one or more fiber bundles over and/or under the one or more spreading elements and by passing air through the one or more fiber bundles.

In some aspects, the spreaded fiber layer can have a mesh fineness 0.05 to 0.2 m. The powdered binder resin can be applied to the spreaded fiber layer by powder scattering, electrostatic coating and/or like. In some aspects, the powdered binder resin can be applied to the spreaded fiber layer at least by, moving the spreaded fiber layer in a first direction underneath a container containing the powdered binder resin, and dispensing the powdered binder resin over the spreaded fiber layer from the container in a second direction that is different from the first direction. The spreaded fiber layer can be moved in the first direction at a line speed of 1 to 15 m/min. The container can be of any suitable shape and size, non-limiting container shape includes funnel, hopper, and/or tray. In some aspects, the container can be a funnel or a hopper with an outlet containing a sieve, such as a metallic sieve. During use, the outlet can be positioned over the spreaded fiber layer and the sieve can be vibrated to dispense powdered binder resin over the spreaded fiber layer. In some aspects, the sieve can be vibrated with compressed air. In some aspects, the container can be a tray, and the tray can be vibrated to dispense powdered binder resin over the spreaded fiber layer. In some aspects, the tray can be vibrated with compressed air. In some aspects, during use the tray can be inclined at an angle 0 to 60 ° with respect to the first direction, over the spreaded fiber layer. In some aspects, after applying the powdered binder resin to at least a portion of a first surface of the spreaded fiber layer, the powdered binder resin can be applied to at least a portion of an opposite surface to the first surface of the spreaded fiber layer. In some aspects, the spreaded fiber layer containing the powdered binder resin can be heated to at least partially or completely melt at least a portion of or all of the powdered binder resin. The spreaded fiber layer containing the powdered binder resin can be heated at a temperature equal to or above the melting point of the binder resin to at least partially melt at least a portion of the powdered binder resin. In some aspects, the spreaded fiber layer containing the powdered binder resin can be heated at a temperature 150 °C to 220 °C to at least partially melt at least a portion of the powdered binder resin. In some aspects, the spreaded fiber layer containing the powdered binder resin can be heated with an heater such as an infrared heater. In some aspects, the spreaded fiber layer containing the powdered binder resin can be passed through or beneath an oven containing an infrared heater and the spreaded fiber layer containing the powdered binder resin can be heated with the infrared heater to melt at least a portion of the powdered binder resin on the fiber layer. The spreaded fiber layer containing the powdered binder resin can be heated while keeping the fibers in the fiber layer at a tension. In some aspects, the spreaded fiber layer containing the powdered binder resin can be heated while keeping the fibers in the fiber layer at a tension 400 N to 800 N. In some aspects, the resin-treated spreaded fiber layer can have a thickness of 70 µm to 300 µm. At least a portion of the fibers in the resin-treated spreaded fiber layer can be coated such as superficially coated with the binder resin. The one or more fiber bundles can include sized and/or unsized fibers. The powdered binder resin can be obtained by cryogenically grinding the binder resin.

One aspect of the present invention is directed to a resin-treated spreaded fiber layer. The resin-treated spreaded fiber layer can be produced according to a method of the present invention. The resin-treated spreaded fiber layer can contain fibers such as carbon fibers, glass fibers, aramid fibers, polyethylene fibers, polyamide fibers, basalt fibers, steel fibers, or a combination thereof, and a binder resin. In some aspects, the resin-treated spreaded fiber layer can contain 5 wt. % to 25 wt. % of the binder resin. In some aspects, the resin-treated spreaded fiber layer can have a thickness 70 µm to 300 µm. The resin-treated spreaded fiber layer can preferably contain carbon fibers such as continuous carbon fibers and/or glass fibers such as continuous glass fibers. At least a portion of the fibers in the resin-treated spreaded fiber layer can be coated with the binder resin. The binder resin can contain a polymer such as polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. The binder resin can preferably contain PC, PBT, a copolymer thereof, or a blend thereof. In some aspects, the PC polymer can be a recycled polymer. In some aspects, the PC polymer, such as the recycled PC polymer can be a post-consumer recycled (PCR) polycarbonate polymer. In some aspects, the recycled PC polymer can have a PCR content 5 wt. % to 90 wt. %. In some aspects, the PBT polymer can be a recycled polymer. In some aspects, the PBT polymer, such as the recycled PBT polymer can be a post-consumer recycled (PCR) PBT polymer. In some aspects, the recycled PBT polymer can have a PCR content 5 wt. % to 90 wt. %. In some aspects, the recycled PBT polymer can be obtained from recycling a PET polymer. In some aspects, the binder resin in addition to the polymer can contain an additive such as a coupling agent, a heat stabilizer such as an antioxidant, an impact modifier, a processing aid, a pigment, an IR absorber such as a near IR (NIR) absorber, a heat activated adhesive, LaB₆, tungsten oxide, a tungstate or any combination thereof. In some aspects, the binder resin can contain 5 wt. % to 98 wt. % of the polymer, such as PC polymer, PBT polymer, a blend thereof, or a combination thereof.

One aspect of the present invention is directed to a method for producing an unidirectional fiber tape (UD tape). The UD tape can include a matrix material including a second resin material and a plurality of fibers dispersed within the matrix material. The method can include, impregnating the resin-treated spreaded fiber layer of the present invention with the second resin material to form the UD tape. The second resin material can contain polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. The impregnation method can be an impregnation method known in the art such as melt impregnation, and/or solvent based impregnation, preferably melt impregnation. In some particular aspects, the melt impregnation method can include casting the second resin material in molten form as a film on a moving resin-treated spreaded fiber layer. The resin-treated spreaded fiber layer can be moved at a line speed of 1 m/min to 15 m/min. In some aspects, the UD tape can have a thickness of 70 µm to 300 µm. In some aspects, the UD tape can have a fiber volume fraction that is greater than 50%. In some aspects, the UD tape can have relatively high lateral fiber cohesion between fibers. In some aspects, the UD tape can have relatively uniform density, such as a mean relative fiber area coverages (RFAC) of 65 % to 90% and a coefficients of variance (COV) of 3 % to 20%. Certain embodiments are directed to a UD tape. The UD tape can be produced according to a method of the present invention.

A resin in the context of the present invention can include a polymer or a blend of polymers. A resin can also include or exclude an additive.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of' what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. Each of the figures, unless identified as a schematic view, is drawn to scale, meaning the sizes of the elements depicted in the figure are accurate relative to each other for at least the embodiment depicted in the figure.
**FIG. 1** is a flow chart of some embodiments of the present methods for producing a resin-treated spreaded fiber layer and a UD tape from the resin-treated spreaded fiber layer.
**FIG. 2** is a schematic side view of an embodiment of the present invention for producing a resin-treated spreaded fiber layer.
**FIG. 3** is a schematic perspective view of a spreading element of the spreading system of FIG. 2.
**FIG. 4** the semi-finished UD tape from (A) experiment 4; (B) experiment 3; (C) experiment 2; and (D) experiment 1 of example 1.
**FIG. 5** UD tape produced by (A) a conventional melt impregnation technique; and (B) from the semi-finished UD tape of experiment 3 of example 1.
**FIG. 6** The semi-finished UD tape from experiment 6 of example 2.
**FIG. 7** Fiber to spreading bar friction for fiber layers treated and not-treated with polymer powder, measured with the methods described in example 3.
**FIG. 8** Fiber breakage for fiber layers treated and not-treated with polymer powder, measured with the methods described in example 3.

### DETAILED DESCRIPTION

A solution to at least one or some or all of the deficiencies in the art noted above has been discovered. In one aspect, the solution can include applying a resin composition in powdered form onto at least a portion of a surface of a spreaded fiber layer to stabilize the spreaded fiber layer. The powdered resin can then be at least partially or fully melted on the surface of the fiber layer, and can then optionally be cooled (e.g., cooled under ambient conditions or active removal of heat such as by a cooling bath). The process can result in a stabilized resin-treated spreaded fiber layer that can then be used to produce a UD tape. Pre-coating the fibers with resin powders prior to UD tape formation can assist in stabilizing the fibers in the lateral direction by maintaining a relatively constant and homogeneous width during an impregnation process for UD tape formation. Pre-coating the fibers with resin powder can also reduce fuzz formation and/or filament breakage and/or increase the cohesion between the fibers and the stiffness of the fiber layer. The resin powder can arrest already broken fiber filaments locally and reduce further breaks.

### A. Methods and Systems for Producing Resin-treated Spreaded Fiber layer and producing UD tapes therefrom

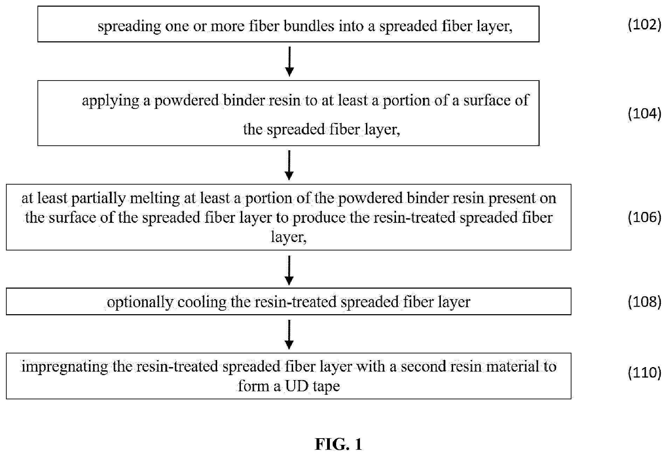

FIG. 1 depicts embodiments of a method for producing a resin-treated spreaded fiber layer. A resin-treated spreaded fiber layer can be produced by spreading one or more fiber bundles into a spreaded fiber layer (step 102), applying a powdered binder resin to at least a portion of a surface of the spreaded fiber layer (step 104), at least partially melting at least a portion of the powdered binder resin present on the surface of the spreaded fiber layer to produce the resin-treated spreaded fiber layer (106), and optionally cooling the resin-treated spreaded fiber layer (108). The resin-treated spreaded fiber layer can be impregnated with a second resin material to form a UD tape (110).

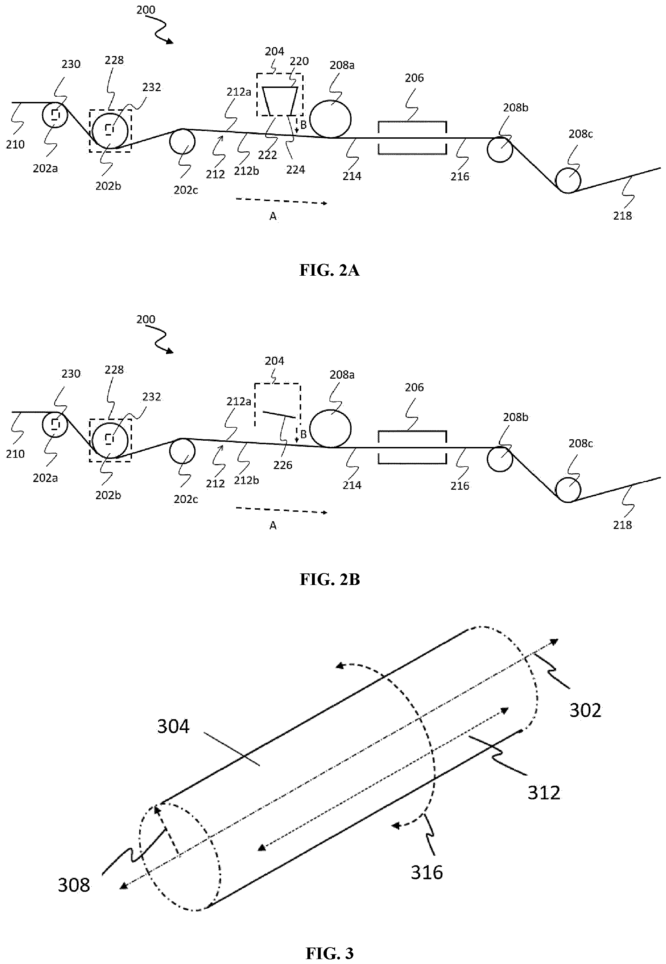

Embodiments of the present fiber spreading system, powder application system, and heating system are illustrated in FIG. 2; however, these systems are not limiting on those methods, which can be performed using any suitable systems.

Referring to FIG. 2A-B a system 200 for producing a resin-treated spreaded fiber layer is described. The system 200 can include one or more spreading elements 202 a-c, a powder dispensing unit 204, a heating unit 206, and one or more guiding elements 208 a-c. Fiber bundle(s) 210, such as strands, rovings, and/or tows of fibers, can be spread using one or more spreading elements 202 a-c to form a spreaded fiber layer 212. The spreaded fiber layer 212 can be passed beneath the powder dispensing unit 204. The powder dispensing unit 204 can dispense powdered binder resin on a surface 212a of spreaded fiber layer 212. The powdered binder resin can be applied relatively evenly on the surface 212a of the spreaded fiber layer 212. The spreaded fiber layer containing the binder resin powders 214 can be guided with one or more guiding elements 208a and can be passed through or beneath (not shown) the heating unit 206. The heating unit 206 can heat and melt the binder resin on the spreaded fiber layer. The spreaded fiber layer with the melted binder resin 216 can be guided out of the heating unit 206 by one or more guiding elements 208b-c and can be cooled (e.g., under ambient conditions or from actively removing heat such as through a cooling bath, which is not shown) to form a resin-treated spreaded fiber layer 218. The overall movement of the spreaded fiber layer during the process for forming the resin-treated spreaded fiber layer 218 is shown with the dotted arrow A. The direction of powder dispensing from the powder dispensing unit 204 to the spreaded fiber layer is shown with the dotted arrow B. In some aspects, an un-coated surface 212b of the spreaded fiber layer 212 can be passed underneath the same powder dispensing unit 204, or a second powder dispensing unit to apply binder resin powders to the surface 212b, before or after passing the fiber layer through the heating unit 206, and the fiber layer with binder resins on both surfaces (212a and 212b) can passed through heating unit 206 to form the resin-treated fiber layer.

Referring to FIG. 2A, in some aspects, the powder dispensing unit 204 can contain a container 220, such as a funnel shaped container configured to contain the powdered binder resin. The container 220 can have an outlet 222 containing a sieve 224 such as a metallic sieve. The sieve 224 can be vibrated to dispense the powdered binder resin from the container 220 to the surface 212a of the spreaded fiber layer 212. In some aspects, the sieve 224 can be vibrated with compressed air. Referring to FIG. 2B, is some aspects, the powder dispensing unit 204 can contain an inclined tray 226 configured to contain the powdered binder resin. The inclined tray 226 can be vibrated to dispense the powdered binder resin from the tray 226 to the surface 212a of the spreaded fiber layer 212. In some aspects, the inclined tray 226 can be vibrated with compressed air. The inclined tray 226 can be inclined at an angle 0 to 60 ° with respect to the surface 212a of the spreaded fiber layer 212.

The powder dispensing unit 204 can dispense the powdered binder resin onto at least a portion of a surface of the spreaded fiber layer by powder scattering, electrostatic coating (not shown), or by a process known in the art that can coat, such as superficially coat at least a portion of one 212a or more (212a and 212b, not shown) surfaces of the spreaded fiber layer. More particularly, in the spreading system 200, the powder dispensing unit 204 can apply the powdered binder resin on a surface 212a of the spreaded fiber layer by powder scattering. In some aspects, the powdered binder resin can be applied to the spreaded fiber layer by electrostatic scattering by building electrostatic charges on the spreaded fiber layer and spraying the powdered binder resin on the electrostatically charged spreaded fiber layer from a top and/or bottom direction of the spreaded fiber layer (not shown).

In some aspects, the fiber bundle(s) 210 can contain carbon fibers, glass fibers, aramid fibers, polyethylene fibers, polyamide fibers, basalt fibers, steel fibers, or a combination thereof. In some aspects, the fiber bundle(s) 210 can contain continuous fibers, such as continuous carbon fibers, continuous glass fibers, continuous aramid fibers, continuous polyethylene fibers, continuous polyamide fibers, continuous basalt fibers, continuous steel fibers, or a combination thereof. In some particular aspects, the fiber bundles 210 can contain carbon such as continuous carbon and/or glass such as continuous glass fibers. The fiber bundle(s) 210 can contain sized or unsized fibers. Such sized fibers may be coated and/or can contain a sizing material, and sized fibers may not be coated and/or may not contain a sizing material. The sizing material can be epoxy, polyester, nylon, polyurethane, urethane, a coupling agent (e.g., an alkoxysilane), a lubricating agent, an antistatic agent, a surfactant, and/or the like. A fiber bundle can include any suitable number of fibers; for example, each fiber bundle can include between 250 and 610,000 fibers, the fiber bundle can be a 1K, 3K, 6K, 12K, 24K, 30K, 50K, or larger fiber bundle, and/or the like. The fiber bundles can be provided on reels from which the fiber bundles can be unwound and provided to a spreading system (e.g., 200) for spreading the fiber bundles into the spreaded fiber layer. The fiber bundle(s) 210 can include any suitable number of fiber bundle(s) (e.g., 1, 2, 3, 4, 5, 6, 7, 8, 9, or more fiber bundle(s)), which can together be passed under and over spreading elements (202a-c) to form the spreaded fiber layer 212.

Each of the spreading elements 202a-c can be oriented substantially perpendicularly to fiber bundle(s) 210 spread by the spreading elements. In some aspects, the spreading elements can each comprise an elongated body (e.g., a bar or a plate) that contacts the fiber bundle(s) and has a longitudinal axis (e.g., 302, FIG. 3) that is substantially perpendicular to the fiber bundle(s).

Spreading elements 202a-c can each define a curved surface 304 that contacts the fiber bundle(s) to spread the fiber bundle(s). In some aspects, curved surface 304 of each of the spreading elements 202a-c can be cylindrical. For example, each of the spreading elements can comprise a bar, where a portion of the bar that contacts the fiber bundle(s) is straight and has a circular cross-section that is substantially constant in diameter. During spreading of fiber bundle(s), such a cylindrical curved surface (e.g., 304), at least by having little to no slope in a direction that is perpendicular to the fiber bundle(s), can reduce forces exerted on, and thus mitigate breakage of, the fibers. Nevertheless, in other embodiments, a curved surface of each of one or more spreading elements can be spherical, ellipsoidal, hyperboloidal, conical, and/or the like. In some embodiments, one or more spreading elements can each comprise a curved plate-as opposed to a bar-that defines its curved surface.

Such a curved surface (e.g., 304) can have any suitable radius (e.g., 308) such as, for example, a radius that is greater than or substantially equal to any one of, or between any two of: 5.0, 5.5, 6.0, 6.5, 7.0, 7.5, 8.0, 8.5, 9.0, 9.5, 10.0, 11.0, 12.0, 13.0, 14.0, 15.0, 16.0, 17.0, 18.0, 19.0, 20.0, 21.0, 22.0, 23.0, 24.0, 25.0, 26.0, 27.0, 28.0, 29.0, or 30.0 mm.

For each of spreading elements 202a-c, the curved surface 304 can be a low-friction surface; for example, the spreading element can comprise a low-friction material (e.g., a heat- or chemically-treated metal, such as steel), the spreading element can include a low-friction coating and/or plating, and/or the like. A non-limiting example of a low-friction plating is a hard chromium plating, such as that available from TOPOCROM. During spreading of fiber bundle(s), such a low-friction curved surface (e.g., 304) can reduce forces exerted on, and thus mitigate breakage of, the fibers.

In some aspects, at least one of spreading elements 202a-c can be moved, such as oscillated relative to fiber bundle(s) 210 during spreading of the fiber bundle(s) with the spreading elements 202a-c. For example, at least one of the spreading elements can be oscillated relative to the fiber bundle(s) in a direction 312 that is aligned with its longitudinal axis 302. More particularly, in spreading system 200, the spreading element 202b can be so oscillated. Such oscillation can be achieved using a drive 228, such as a motor, coupled to the at least one spreading element. Such oscillation can be at any suitable amplitude, such as, for example, an amplitude that is greater than or substantially equal to any one of, or between any two of: 0.1, 0.2, 0.3, 0.4, 0.5, 1.0, 1.5, 2.0, 2.5, 3.0, 3.5, 4.0, 4.5, 5.0, 6.0, 7.0, 8.0, 9.0, 10.0, 11.0, 12.0, 13.0, 14.0, 15.0, 16.0, 17.0, 18.0, 19.0, or 20.0 mm (e.g., from 0.1 mm to 20.0 mm, from 0.1 mm to 10 mm, from 0.5 mm to 8.0 mm, or from 1.0 mm to 5.0 mm), and at any suitable frequency, such as, for example, a frequency that is greater than or substantially equal to any one of, or between any two of: 0.1, 0.2, 0.3, 0.4, 0.5, 1.0, 1.5, 2.0, 2.5, 3.0, 3.5, 4.0, 4.5, or 5.0 hertz (Hz) (e.g., from 0.1 Hz to 5.0 Hz or from 0.5 Hz to 2.0 Hz). Such oscillation of a spreading element can facilitate spreading of fiber bundle(s) with the spreading element, by, for example, encouraging juxtaposition of the fibers.

In some aspects, at least one of spreading elements 202 a-c can be rotated relative to the fiber bundle(s) in a direction 316 about its longitudinal axis 302 during spreading of the fiber bundle(s) with the spreading element. More particularly, in spreading system 200, the spreading element 202a can be roated. Such rotation can be achieved via a drive (e.g., 230), such as a motor, coupled to the spreading element. Such rotation can be performed in an oscillating fashion at any suitable amplitude, such as, for example, an amplitude that is greater than or substantially equal to any one of, or between any two of: 0.5, 1.0, 1.5, 2.0, 2.5, 3.0, 3.5, 4.0, 4.5, 5.0, 6.0, 7.0, 8.0, 9.0, 10.0, 12.0, 14.0, 16.0, 18.0, or 20 degrees, and at any suitable frequency, such as, for example, any frequency described above.

In some aspects, at least one of spreading elements 202 a-c can be heated during spreading of the fiber bundle(s) with the spreading element. For example, a temperature of the spreading element can be greater than or substantially equal to any one of, or between any two of: 80, 90, 100, 110, 120, 130, 140, 150, 160, 170, 180, 190, or 200 °C (e.g., between approximately 100 °C and approximately 180 °C). Heating of a spreading element (e.g., any of 202 a-c) can be accomplished in any suitable fashion, such as, for example, via a heating element coupled (232) to the spreading element.

The powdered binder resin can contain powder particles with D50 5 µm to 100 µm, or at least any one of, equal to any one of, or between any two of 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, and 100 µm.

The powdered binder resin can be obtained by cryogenically grinding the binder resin. The binder resin can contain a polymer such as a polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. Such a thermoset material can include, for example, an unsaturated polyester resin, a polyurethane, bakelite, duroplast, urea-formaldehyde, diallyl-phthalate, epoxy resin, an epoxy vinylester, a polyimide, a cyanate ester of polycyanurate, dicyclopentadiene, a phenolic, a benzoxazine, a copolymer thereof, or a blend thereof.

The binder resin can preferably contain a PC polymer, a PBT polymer, a copolymer thereof, or a blend thereof. In some aspects, the PC polymer can be recycled PC polymer. In some aspects, the recycled PC polymer can have a post-consumer-recycled (PCR) content 5 wt. % to 90 wt. %. In some aspects, the PBT polymer can be recycled PBT polymer. In some aspects, the recycled PBT polymer can have a PCR content 5 wt. % to 90 wt. %. In some aspects, the recycled PBT polymer can be obtained from recycling a PET polymer. The binder resin can contain 5 wt. % to 98 wt. % of the polymer.

In some aspects, the binder resin in addition to the polymer can contain an additive such as a coupling agent, a heat stabilizer such as an antioxidant, an impact modifier, a processing aid, a pigment, an IR absorber such as a near IR (NIR) absorber, a heat activated adhesive, LaB₆, tungsten oxide, a tungstate or any combination thereof. The additive can be added during compounding of the binder resin or as a powder during dry blending. In some aspects, one or more additives, such as the coupling agent can be applied to the fibers before applying the binder resin to the spreaded fiber layer. In some aspects, the coupling agent can be applied to spread, unspread and/or partially spread fibers before applying the binder resin to the spreaded fiber layer. In some aspects, the coupling agent can be applied to spread, unspread and/or partially spread fibers by applying a mist, spray of the coupling agent to the fibers and/or by passing or dipping the spread, unspread and/or partially spread fibers through a bath containing the coupling agent. In some aspects, the coupling agent can be a silane coupling agent. In some aspects, the silane coupling agent can be epoxy, acryloxy, methacryloxy, amino, isocyanate functionalized silane coupling agent or any combination thereof. In some aspects, the binder resin can contain a polymer such as a PC polymer and a silane coupling agent such as epoxy, acryloxy, methacryloxy, amino, isocyanate functionalized silane coupling agent or any combination thereof, preferably epoxy functionalized silane coupling agent. In some aspects, the binder resin can contain a PBT polymer and a silane coupling agent such as epoxy, amino, isocyanate functionalized silane coupling agent or any combination thereof, preferably epoxy and/or amino functionalized silane coupling agent. The coupling agent, can help improving the interaction between the fiber surface and the polymer powder through physical or reactive/chemical interactions such as interfacial adhesion. The coupling agent can be added with the polymer in a concentrated form, or in a diluted form. In some aspects, the coupling agent can be diluted with a suitable solvent such as water to ensure relatively uniform distribution of the coupling agent with the binder resin polymer powder and/or the fibers. In some aspects, the solvent can be removed before or while contacting the binder resin powders such as polymer powders with the spreaded fiber layer. In some aspects, the anti-oxidant can include a sterically hindered phenolic antioxidant, and/or a hydrolytically stable phosphite stabilizer. In some aspects, the sterically hindered phenolic antioxidant can include pentaerythritol tetrakis[3-[3,5-di-tert-butyl-4-hydroxyphenyl]propionate and/or octadecyl-3-[3,5-di-tert-butyl-4-hydroxyphenyl]propionate. In some aspects, the hydrolytically stable phosphite stabilizer can include tris(2,4-di-tert.-butylphenyl)phosphite. The hydrolytically stable phosphite stabilizer can help in reducing thermo-oxidative degradation of the binder resin powder such as the binder resin polymer powder during binder resin application process. In some aspects, the binder resin can include 0.05 wt. % to 1 wt. % or at least any one of, equal to any one of, or between any two of 0.05 wt. %, 0.1 wt. %, 0. 2 wt. %, 0. 4 wt. %, 0.6 wt. %, 0. 8 wt. % and 1 wt. %, of a sterically hindered phenolic antioxidant. Non-limiting examples of anti-oxidant includes IRGANOX® 1010, IRGANOX® 1076, and/or IRGAFOS® 168, commercially available from BASF. The impact modifier and/or the processing aid can increase mechanical performance of the resin-treated spreaded fiber layer and/or the UD tape produced from the resin-treated spreaded fiber layer.

In some aspects, the binder resin can contain 0.01 wt. % to 5 wt. % of a near IR (NIR) absorber such as quaterrylenetetracarboxylic diimide. Non-limiting examples of NIR absorber includes LUMOGEN IR 788, commercially available from BASF. The pigment can contain an antimony tin composition, a mica based platelet type pigment, and/or a carbon black pigment. In some aspects, the binder resin can contain of an antimony tin composition. Non-limiting examples of an antimony tin composition includes MINATEC 230 A-IR, commercially available from MERCK. In some aspects, the binder resin can further include 0.01 wt. % to 5 wt. % of a mica based platelet type pigment. Non-limiting examples of mica based platelet type pigment includes LAZERFLAIR 825, commercially available from MERCK. In some aspects, the binder resin can further include 0.01 wt. % to 5 wt. % of carbon black. The heat activated adhesive can include a polyolefine, amorphous alpha polyolefin, modified polyolefine, ethylene vinyl acetate (EVA), ethylene acrylic acid (EAA), Butylene acrylic acid (BAA), polypropylene, co-polyester, copolyamide, thermoplastic polyurethane, polycaprolactone, styrene-blockcopolymer based hotmelt adhesive. In some aspects, the binder resin can further include 0.01 wt. % to 5 wt. % LaB₆.

In some aspects, the heating unit 206 can include an infrared heater. The spreaded fiber layer containing the binder resin powders can be heated at a temperature 150 °C to 220 °C or at least any one of, equal to any one of, or between any two of 150 °C, 160 °C, 170 °C, 180 °C, 190 °C, 200 °C, 210 °C, and 220 °C to melt the binder resin. The heating of the layer 214 in the heating unit 206 and the subsequent cooling of the layer 216 can be conducted in an inert gas environment, such as nitrogen gas environment. Heating and/or cooling in the inert gas environment can reduce degradation of a binder polymer such a PC polymer and/or, can reduce yellowing of the binder polymer. Heating and/or cooling in the inert gas environment may result in resin-treated spreaded fiber layers that results in UD tapes with better mechanical properties.

The system 200 can include one or more guiding elements, 208 a, for guiding the spreaded fiber layer containing binder resin powder 214 into and out of the heating unit 206. Such guiding elements can comprise bars, plates, rollers, and/or the like. The guiding elements 208a-c can comprise any of the features described above with respect to spreading elements 202a-c. In some aspects, one or more of the guiding elements, can be a pressing element. In some aspects, one or more of the guiding elements, can be a calendaring roll.

The present methods can be performed using any suitable line speed, such as, for example, a line speed that is greater than or substantially equal to any one of, or between any two of: 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 11, 12, 13, 14, or 15 meters per minute (m/min) (e.g., between 1 m/min and 15 m/min or between 2 m/min and 6 m/min). A line speed can refer to a speed of the fiber bundle(s) 210, a speed of the spreaded fiber layer 212, a speed of the spreaded fiber layer containing the binder resin powders 214, a speed of the spreaded fiber layer containing melted resin 216 and/or the like through the system 200.

The fibers in the fiber layer of 212, 214, and/or 216 can be at a tension 400 N to 800 N, at least any one of, equal to any one of, or between any two of 400 N, 450 N, 500 N, 550 N, 600 N, 650 N, 700 N, 750 N and 800 N. In some aspects, the spreaded fiber layer containing the binder resin powders 214 can be heated with the heating unit 206 while keeping the fibers in the layer 214 at a tension 400 N to 800 N.

The resin-treated spreaded fiber layer 218 can be impregnated with a second resin material to form an UD tape. The second resin material can form a matrix of the UD tape. The second resin material can contain polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof.

The impregnation method for forming a UD tape can be an impregnation method known in the art such as melt impregnation, and/or solvent based impregnation, preferably melt impregnation. In some particular aspects, the melt impregnation process can include casting the second resin material in molten form as a film on a moving resin-treated spreaded fiber layer. The moving resin-treated spreaded fiber layer can be moved at a line speed of 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 11, 12, 13, 14, or 15 meters per minute (m/min) (e.g., between 1 m/min and 15 m/min or between 2 m/min and 6 m/min). In some aspects, the UD tape can be made by a melt impregnation technology as disclosed in Patent Application Publication No. PCT/IB2018/051673 to Ratouit et al.*,* which is incorporated herein by reference in its entirety. In some particular aspects, the melt impregnation process can include, forming a first resin-treated spreaded fiber layer, forming a second spreaded fiber layer (which can be a resin-treated layer of the present invention or any other type of spreaded fiber layer), casting molten second resin material on the first and/or second spreaded fiber layer and pressing together the first and second spreaded fiber layes. In some particular aspects, the melt impregnation process can include, forming a first resin-treated spreaded fiber layer, forming a second resin-treated spreaded fiber layer, casting molten second resin composition on the first and/or second resin-treated spreaded fiber layer and pressing together the first and second spreaded fiber layers. The first and/or the second resin-treated spreaded fiber layer can be produced according to the methods of forming the resin-treated spreaded fiber layer of the present invention. The second spreaded fiber layer can be produced according to the methods of forming the spreaded fiber layer of the current invention. It is contemplated, however, that other spreaded fiber layers not formed with a method of the present invention can be used as the second spreaded fiber layer.

### B. Resin-Treated Spreaded Fiber layer and UD tapes produced therefrom

The resin-treated spreaded fiber layer of the present invention, for example 218, can have any suitable length and any suitable width. For example, the length of the resin-treated spreaded fiber layer 218 can be greater than or substantially equal to any one of, or between any two of: 1, 2, 3, 4, 5, 6, 7, 8, 9, 10, 12, 14, 16, 18, 20, 25, 30, 35, 40, 45, 50, 55, 60, 70, 80, 90, or 100 meters (m). For further example, width of the resin-treated spreaded fiber layer 218 can be greater than or substantially equal to any one of, or between any two of: 1, 2, 3, 4, 5, 6, 7, 8, 9, 10, 12, 14, 16, 18, 20, 25, 30, 35, 40, 45, 50, 55, 60, 70, 80, 90, or 100 centimeters (cm). The resin-treated spreaded fiber layer 218 can be thin; for example, a thickness of the resin-treated spreaded fiber layer 218, which can be an average thickness, can be less than or substantially equal to any one of, or between any two of: 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, or 0.30 mm (e.g., between 0.07 mm and 0.30 mm, between 0.10 mm and 0.25 mm, or approximately 0.15 mm).

The resin-treated spreaded fiber layer of the present invention, for example 218, can include carbon fibers, glass fibers, aramid fibers, basalt fibers, or a combination thereof (e.g., carbon fibers and/or glass fibers). The resin-treated spreaded fiber layer of the present invention, for example 218, can contain at least any one of, equal to any one of, or between any two of 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, and 25 wt. %, of the binder resin. In some aspects, the resin-treated spreaded fiber layer 218 can contain 5 wt. % to 25 wt. % at least any one of, equal to any one of, or between any two of 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, and 25 wt. %, of the polymer of the binder resin.

An UD tape produced from the resin-treated spreaded fiber layer of the present invention, can have any suitable length and any suitable width. For example, the UD tape can be greater than or substantially equal to any one of, or between any two of: 1, 2, 3, 4, 5, 6, 7, 8, 9, 10, 12, 14, 16, 18, 20, 25, 30, 35, 40, 45, 50, 55, 60, 70, 80, 90, or 100 meters (m). For further example, width of the UD tape can be greater than or substantially equal to any one of, or between any two of: 1, 2, 3, 4, 5, 6, 7, 8, 9, 10, 12, 14, 16, 18, 20, 25, 30, 35, 40, 45, 50, 55, 60, 70, 80, 90, or 100 centimeters (cm). A thickness of the UD tape, such as an average thickness of the UD tape, can be less than or substantially equal to any one of, or between any two of: 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, or 0.30 mm (e.g., between 0.07 mm and 0.30 mm, between 0.10 mm and 0.25 mm, or approximately 0.15 mm).

An UD tape produced from the resin-treated spreaded fiber layer of the present invention, can include carbon fibers, glass fibers, aramid fibers, basalt fibers, or a combination thereof (e.g., carbon fibers or glass fibers). A matrix material of the UD tape can include a thermoplastic material, including polyethylene terephthalate (PET), a polycarbonate (PC), polybutylene terephthalate (PBT), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), a polyamide (PA), polysulfone sulfonate (PSS), polyaryl ether ketone (PAEK), acrylonitrile butyldiene styrene (ABS), polyphenylene sulfide (PPS), polyether sulfone (PES), a copolymer thereof, or a blend thereof (e.g., polycarbonate, a polyamide (e.g., polyamide 6, polyamide 66, and/or the like), a copolymer thereof, or a blend thereof). In some aspects, the matrix material of the UD tape can include a flame retardant, such as, for example, a phosphate structure (e.g., resorcinol bis(diphenyl phosphate)), a sulfonated salt, halogen, phosphorous, talc, silica, a hydrated oxide, a brominated polymer, a chlorinated polymer, a phosphorated polymer, a nanoclay, an organoclay, a polyphosphonate, a poly[phosphonate-co-carbonate], a polytetrafluoroethylene and styrene-acrylonitrile copolymer, a polytetrafluoroethylene and methyl methacrylate copolymer, a polysilixane copolymer, and/or the like. In some aspects, the matrix material of the UD tape can include, a coupling agent to promote adhesion between the matrix material and fibers of the UD tape, an antioxidant, a heat stabilizer, a flow modifier, a stabilizer, a UV stabilizer, a UV absorber, an impact modifier, a cross-linking agent, a colorant, or a combination thereof. Non-limiting examples of a coupling agent include POLYBOND 3150 maleic anhydride grafted polypropylene, commercially available from DUPONT, FUSABOND P613 maleic anhydride grafted polypropylene, commercially available from DUPONT, maleic anhydride ethylene, or a combination thereof. A non-limiting example of a flow modifier is CR20P peroxide masterbatch, commercially available from POLYVEL INC. A non-limiting example of a heat stabilizer is IRGANOX B 225, commercially available from BASF. Non-limiting examples of UV stabilizers include hindered amine light stabilizers, hydroxybenzophenones, hydroxyphenyl benzotriazoles, cyanoacrylates, oxanilides, hydroxyphenyl triazines, and combinations thereof. Non-limiting examples of UV absorbers include 4-substituted-2-hydroxybenzophenones and their derivatives, aryl salicylates, monoesters of diphenols, such as resorcinol monobenzoate, 2-(2-hydroxyaryl)-benzotriazoles and their derivatives, 2-(2-hydroxyaryl)-1,3,5-triazines and their derivatives, or combinations thereof. Non-limiting examples of impact modifiers include Non-limiting examples of impact modifiers include elastomers/soft blocks dissolved in one or more matrix-forming monomers (e.g., bulk HIPS, bulk ABS, reactor modified PP, LOMOD, LEXAN EXL, and/or the like), thermoplastic elastomers dispersed in a matrix material by compounding (e.g., di-, tri-, and multiblock copolymers, (functionalized) olefin (co)polymers, and/or the like), pre-defined core-shell (substrate-graft) particles distributed in a matrix material by compounding (e.g., MBS, ABS-HRG, AA, ASA-XTW, SWIM, and/or the like), or combinations thereof. Non-limiting examples of cross-linking agents include divinylbenzene, benzoyl peroxide, alkylenediol di(meth)acrylates (e.g., glycol bisacrylate and/or the like), alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, or combinations thereof. In some UD tapes such an additive can comprise neat polypropylene.

An UD tape produced from the resin-treated spreaded fiber layer of the present invention, can have a fiber volume fraction that is greater than 50%. In some aspects, the UD tape can have relatively high lateral fiber cohesion. In some aspects, the UD tape can have a mean RFAC of from 65 % to 90 %and a COV of from 3% to 20 %, more preferably, a mean RFAC of from 70% to 90% and a COV of from 3 % to 15%, and even more preferably, a mean RFAC of from 75% to 90% and a COV of from 3 % to 10 %.

### EXAMPLES

The present invention will be described in greater detail by way of specific examples. The following examples are offered for illustrative purposes only and are not intended to limit the invention in any manner. Those of skill in the art will readily recognize a variety of non-critical parameters that can be changed or modified to yield essentially the same results.

### EXAMPLE 1

### UD Tapes from resin-treated spreaded glass fiber layers

UD tapes were prepared in a two-step process. In a first step a semi-finished UD tape, (e.g. a resin-treated spreaded fiber layer) was produced, and in a second step the semi-finished UD tapes were melt impregnated with a resin to produce a UD tape.

Glass fibers in the form of rovings were spread and were stabilized via scattering of micronized polyester or PBT powder. Four experiments were performed. In experiment 1, a spreaded glass fiber layer was stabilized with powders with D50 80 -160 µm of a binder resin containing micronized polyester (Griltex CE20 Co-polyester). In experiment 2, a spreaded glass fiber layer was stabilized with micronized powders with D50 75 µm of a binder resin containing PBT-PC polymer blend. In experiment 3, a spreaded glass fiber layer was stabilized with a PBT containing micronized binder resin powders with D50 31 µm. In experiment 4, a spreaded glass fiber layer was stabilized with a PBT containing micronized binder resin powder with particle size D50 72 µm. All experiments were performed using three HiPertex H2020 Rovings from 3B (Type 2020, epoxy compatible sizing, 2400tex, 3.2% elongation at break, 2800 MPa Strength, 88 GPa Modulus). The pellets of the binder resins were cryogenically ground and were sieved to provide micronized powders. The powder dimensions were characterized using a Mastersizer 2000 with Hydro 2000 MU liquid feeding system from Malvern to determine particle size distribution (PSD) in methanol with laser diffraction technology providing D10, D50 and D90 data. The polymer powders investigated, are listed in Table 1. Detailed composition of binder resin of experiment 2, 3 and 4 is provided in Table IB.

**Table 1A: Polymer powder used**

| **Experiment** | **Polymer Material** | **Particle Size D50 (µm)** |
|---|---|---|
| 1 | Co-polyester | 80-160 |
| 2 | PBT/PC (70/30) | 75 (D50) |
| 3 | PBT | 31 (D50) |
| 4 | PBT | 72 (D50) |

**Table 1A: Binder resin of Experiment 2, 3 and 4**

| | | | **Binder Resin of Experiment 2** | **Binder Resin of Experiment 3, 4** |
|---|---|---|---|---|
| **Component Chemical Name or RM description** | **Chemical Name** | ***Supplier*** | **Avg. Wt%** | **Avg. Wt%** |
| Antioxidant 1010, Irganox 1010 | Pentaerythritol tetrakis(3-(3,5-di-tert-butyl-4-hydroxyphenyl)propi onate) | *BASF* | 0.1500 | 0.1485 |
| Mono zinc phosphate | Mono zinc phosphate | | 0.0500 | |
| HYTREL 4056 | Polyester Elastomer | *Dupont* | 0.0000 | 4.95 |
| Cyasorb UV-5411, Tinuvin 329 | 2-(2'-hydroxy-5'-(1,1,3,3-tetramethylbutyl)phe nyl)benzotriazole | *Cytec, Ciba* | 0.2500 | 0.2475 |
| FYROLFLEX SOL-DP | proprietary oligomeric phosphate ester | *ICL Industrial Products* | 8.5000 | 8.415 |
| THPE based branched PC/ Branched polycarbonate (MW 33600±500 Dalton; MVR 300 °C, 1.2kg (2.5±1 cc/10 min)) | Polycarbonate | *SABIC* | 13.5650 | |
| Valox ® resin grade 315 | | *SABIC* | 16.0000 | |
| PC175 (Linear polycarbonate (MW 21800±400 Dalton; MVR 300 °C, 1.2kg (26±4 cc/10min)) | Polycarbonate | *SABIC* | 13.4850 | |
| Valox ® resin grade 195 | | *SABIC* | 48.0000 | 85.239 |
| SIPERNAT® 22 S | Hydrated silica | *Evonik* | | 0.8 |
| Additive EN (Armostat 300 Tallow-bis(2-hydroxyethyl) amine) | Tallow-bis(2-hydroxyethyl) amine | *Nouryon* | | 0.2 |

Polymer powders of experiments 1 to 4, were placed in containers containing of funnel and a fine metallic sieve. Glass fibers in form of rovings were spread to form spreaded fiber layers and were passed beneath the containers at selected line speeds (Table 2). The fine metallic sieves were vibrated with compressed air to dispense and apply the powders on top of the spreaded rovings, while it is passed underneath the containers. The coated spreaded rovings were guided through an oven, equipped with an infrared heater which heated, melted and activated the applied powders at an activation temperature shown in table 2. At the exit of the heated zone, the material cools gradually while guided over and under guiding element bars and forms a semi-finished UD tape product e.g. resin-treated spreaded fiber layer. The temperature of the heater was measured via a thermocouple, placed in the air close to the IR heater. The process parameters used to produce semi-finished tapes, and the semi-finished UD tape quality are summarized in Table 2.

**Table 2: Process parameters used are to produce semi-finished UD tapes and semi-finished UD tape quality**

| **Polymer Powder** | **Mesh fineness of the spreaded rovings (m)** | **Activation Temperature** (°C) | **Line speed** (m/min) | **Powder distribution & tape cohesion quality** | **Processing Comments** |
|---|---|---|---|---|---|
| Experiment 1 | 0.1 | 120-130 | 3 | Best | Good consistency and dry tape cohesion |
| Experiment 2 | 0.1 | 180-190 | 3 | Very high inter-particle adhesion Uneven powder distribution | Mesh obstruction over time |
| Experiment 3 | 0.08 | 160-170 | 3 | Good | Discoloration Air @ 200°C @ 1m/min |
| Experiment 4 | 0.08 | 160-170 | 3 | High amount of binder needed for cohesive effect | No discoloration Air @ 3m/min |

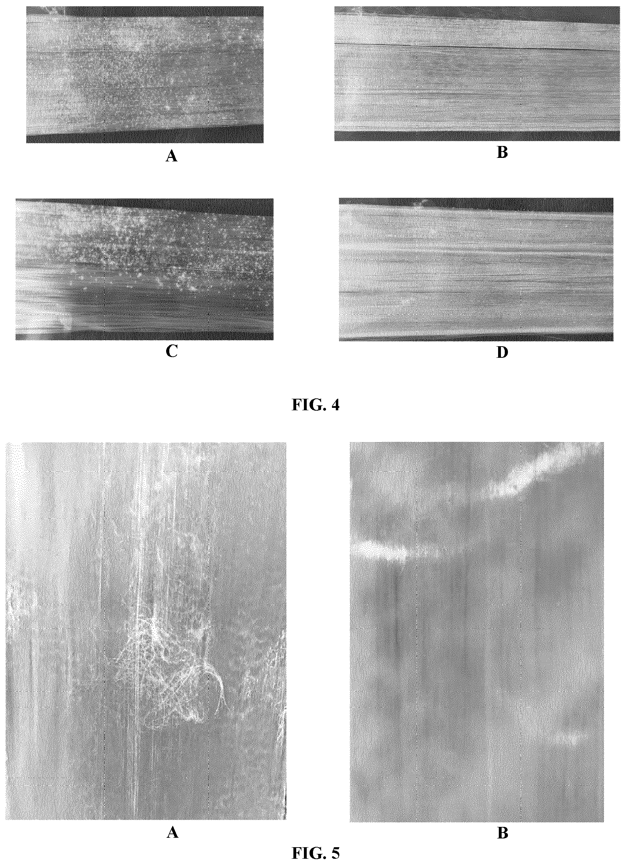

As shown in Table 2, the most consistent dry tape in terms of powder distribution and cohesion quality was attained using the powders of experiment 1 and 3. Fig. 4A-D shows the semi-finished UD tape quality for experiments 1 to 4.

Based on the above results, powders of experiment 1 and 3 were used to produce UD tape batches of 200-300 m of material, wound onto a single roll. Mechanical and/or air spreading technologies were used to form the spreaded fiber layer, and were stabilized via scattering of powders of experiment 1 or 3. The spreaded fiber layers were kept at a tension 600 N during heating the powders applied on the spreaded fiber layers.

UD tapes were prepared by melt impregnation of the semi-finished UD tape. Process parameters used are provided in Table 3. The quality of the tape produced in shown in Table 4.

**Table 3: Process parameters used are to produce UD tapes**

| **Trial #** | **Spreading method** | **Polymer Powder type** | **Production speed** (m/min) | **Tensio**n (N) | **Temperature** (°C) | **RH** (%) | **Produced material** (m) |
|---|---|---|---|---|---|---|---|
| 1 | Mechanical | of experiment 1 | 3.3 | 600 | 127-135 | 33 | 300 - 1 roll |
| 2 | Mechanical | of experiment 1 | 3.3 | 600 | 120-130 | 35 | 260 - 1 roll |
| 3 | Mechanical | of experiment 3 | 4.2 | 600 | 200-205 | No Info | 230 - 1 roll |

**Table 4: Tape quality**

| **Trial** # | **Polymer Powder type** | **Location** (m/roll length m) | **Thickness of the UD tape** (mm) | **Polymer (%) in the Semi-finished UD tape** | **Total Fuzz** (g) |
|---|---|---|---|---|---|
| 1 | of experiment 1 | 10/350 | 0.12±0,01 | 8 | 1 |
| | | 310/350 | | | |
| 2 | of experiment 1 | 10/300 | 0.08±0,02 | 4.6 | 2.93 |
| | | 280/300 | | | |
| 3 | of experiment 3 | 10/280 | 0.15±0,04 | 2.7 | 0.68 |
| | | 250/280 | | | |

The UD tape produced according to trial 3 was compared with a UD tape produced according to conventional melt impregnation technique, where the spreaded fiber layer was not stabilized with a micronized polymer powder. As can be seen from Fig. 5 UD tape produced according to the methods of the present invention provides better quality tapes with less fuzz formation.

### EXAMPLE 2

### UD Tapes from resin-treated spreaded carbon fiber layers

UD tapes were prepared in a two-step process. In a first step a semi-finished UD tape, e.g. a resin-treated spreaded fiber layer was produced, and in a second step the semi-finished UD tapes were melt impregnated with a resin to produce a UD tape.

Carbon fibers in the form of rovings were spread and stabilized via scattering of micronized polyester or PC powder. Two experiments were performed. In experiment 5, a spreaded carbon fiber layer was stabilized with micronized polyester (Griltex CE20 Co-polyester) powders with particle size 80 to 160 µm. In experiment 6, a spreaded carbon fiber layer was stabilized with micronized PC powders with particle size D50 80 µm. All experiments were performed using three HR40 carbon fiber rovings provided by Mitsubishi (Type D, TP compatible sizing). The pellets of the polymers were cryogenically ground and sieved to provide micronized powders. The powder dimensions were characterized using a Mastersizer 2000 with Hydro 2000 MU liquid feeding system from Malvern to determine particle size distribution (PSD) in methanol with laser diffraction technology providing D10, D50 and D90 data. The polymer powders investigated, are listed in Table 5.

**Table 5: Polymer powder used**

| **Experiment** | **Material** | **Particle Size (µm)** |
|---|---|---|
| 5 | Co-polyester | 80-160 |
| 6 | PC | 80 (D50) |

Polymer powders of experiments 5 - 6, were placed in inclined places such as trays. Carbon fibers in the form of rovings were spread to form spreaded fiber layers and were passed beneath the inclined planes at selected line speeds (Table 6). The inclined planes were vibrated with compressed air to dispense and apply the powders on top of the spreaded rovings, while it is passed underneath the inclined planes. The coated spreaded rovings were guided by a set of rolls through an oven, equipped with an infrared heater which heated, melted and activated the applied powders at an activation temperature shown in table 6. At the exit of the heated zone, the material cools gradually while guided over and under guiding element bars and forms a semi-finished UD tape product. The temperature of the heater is measured via a thermocouple, placed in the air close to the IR heater. The process parameters used to produce semi-finished tapes, and the semi-finished UD tape quality are summarized in Table 6.

**Table 6: Process parameters used are to produce semi-finished UD tapes and semi-finished UD tape quality**

| **Polymer Powder** | **Activation Temperature** (°C) | **Line speed** (m/min) | **Powder distribution & tape cohesion quality** | **Processing Comments** |
|---|---|---|---|---|
| Polyester of Experiment 5 | 160 | 5 | Good | Optimum cohesion, no gaps Very stable product Easy to unwind |
| PC of Experiment 6 | 260 | 5 | Good | Occasional gaps Difficult to unwind (sticky) |

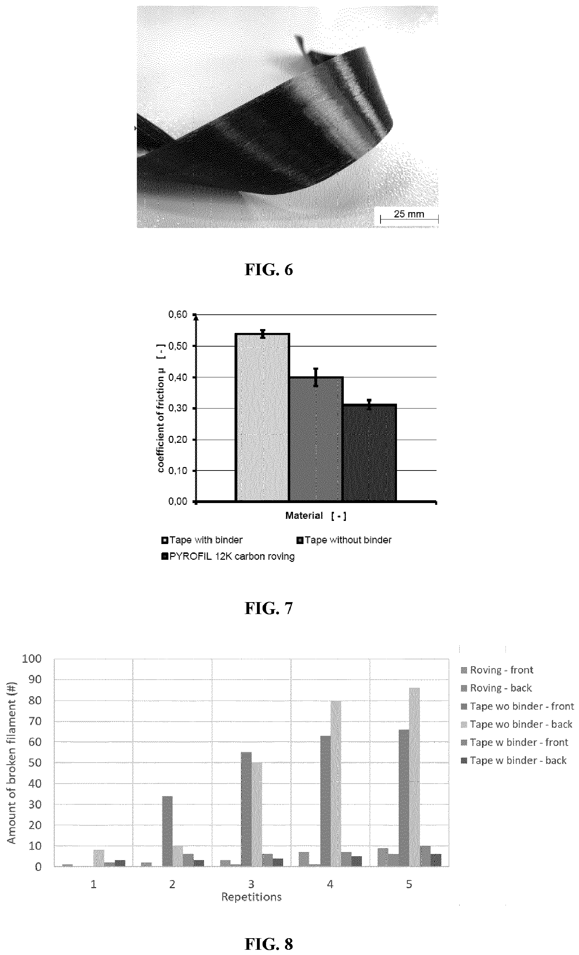

Fig. 6 shows the semi-finished UD tape for experiment 6. Powders of experiment 5 and 6 were used to produce UD tapes. Mechanical spreading technologies were used to form the spreaded fiber layer, and were stabilized via scattering of powders of experiment 5 or 6. The spreaded fiber layers were kept at a tension 600 N during heating the powders applied on the spreaded fiber layers. UD tapes were prepared by melt impregnation of the semi-finished UD tape. Process parameters used are provided in Table 7.

**Table 7: Process parameters used are to produce UD tapes**

| **Trial #** | **Spreading method** | **Polymer Powder type** | **Production speed** (m/min) | **Tension** (N) | **Temperature** (°C) | **RH** (%) | **Produced material** (m) |
|---|---|---|---|---|---|---|---|
| 1 | Mechanical | of experiment 5 | 5 | 600 | 160 | 40 | 100 |
| | | | | | | | 1 roll |
| 2 | Mechanical | of experiment 6 | 5 | 600 | 200-205 | 40 | 800 |
| | | | | | | | 1 roll |

The quality of the tape produced is shown in Table 8.

**Table 8: UD tape parameters**

| **Trial** # | **Polymer Powder type** | **Location** (m/roll length m) | **Thickness of the UD tape** (mm) | **Polymer (%) in the Semi-finished UD tape** |
|---|---|---|---|---|
| 1 | of experiment 5 | 10/350 | 0.10 | 9 |
| | | 310/350 | | |
| 2 | of experiment 6 | 10/300 | | 11 |
| | | 280/300 | | |

### EXAMPLE 3

### Influence of powder application on the amount of broken filaments

To quantify the influence of powder application on the amount of broken fiber filaments after contact with a static steel coated bar (element) typically used for spreading, a dedicated tribology test bench was used at the Institute of Textile Technology of the RWTH Aachen University (ITA).

The fiber to element friction and amount of associated filament breakages were quantified for a single HR40 roving as supplied by Mitsubishi, without any spreading. A single roving which was spread and coated with fiber using the same process used to produce the tapes listed in Tables 3 and 4 was tested from both sides (powder rich vs dry side). The results of the measurements are presented in Fig. 7.

Fig. 7 shows that the addition of polymer powder enhances the friction between the fiber and the bar. This may be due to enhancing the area of contact of the material to the bar. The measurement has a small standard deviation indicating a robust and repeatable measurement method.

Although the powder stabilized tape seems to have a higher friction coefficient and essentially a higher amount of filament breakage is anticipated, this is not shown by the measurements shown in Fig. 8. The side of the spread roving stabilized with the powder showed very small amount of broken filaments. On the contrary the side of the spread without the powder suffered from almost ten times more filament breakages. This proves that the binder application helps to reduce fuzz formation and filament breakage that can lead to roving breakage and a significantly reduced tape quality.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A method for producing a resin-treated spreaded fiber layer, the method comprising:
spreading one or more fiber bundles into a spreaded fiber layer;
applying a powdered binder resin to at least a portion of a surface of the spreaded fiber layer; and
at least partially melting at least a portion of the powdered binder resin present on the surface of the spreaded fiber layer to produce the resin-treated spreaded fiber layer.

2. The method of claim 1, wherein the powdered binder resin comprises powder particles with D50 5 µm to 100 µm.

3. The method of any one of claims 1 or 2, wherein the powdered binder resin comprises a polymer selected from the group consisting of polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof, preferably PC, PBT, a copolymer thereof, and a blend thereof.

4. The method of any one of claims 1 to 3, wherein the one or more fiber bundles comprise carbon fibers, glass fibers, aramid fibers, polyethylene fibers, polyamide fibers, basalt fibers, steel fibers, or a combination thereof, preferably continuous carbon fibers and/or continuous glass fibers.

5. The method of any one of claims 1 to 4, wherein the resin-treated spreaded fiber layer comprises 5 to 25 wt. % of the binder resin.

6. The method of any one of claims 1 to 5, wherein the one or more fiber bundles are spread by air and/or mechanically.

7. The method of any one of claims 1 to 6, wherein the powdered binder resin is applied on at least a portion of the surface of the spreaded fiber layer at least by:
moving the spreaded fiber layer in a first direction underneath a container containing the powdered binder resin; and
dispensing the powdered binder resin on the spreaded fiber layer from the container in a second direction that is different from the first direction.

8. The method of claim 7, wherein the spreaded fiber layer is moved in the first direction at a speed of 1 to 15 m/min and/or wherein the container is vibrated with compressed air to dispense the powdered binder resin on the spreaded fiber layer.

9. The method of any one of claims 1 to 8, wherein the spreaded fiber layer has a mesh fineness 0.05 to 0.2 m.

10. The method of any one of claims 1 to 9, wherein the spreaded fiber layer comprising the powdered binder resin is heated at a temperature 150 °C to 220 °C to at least partially melt at least a portion of the powdered resin, and/or wherein the spreaded fiber layer comprising the powdered binder resin is heated while keeping the fibers in the fiber layer at a tension 400 N to 800 N.

11. The method of any one of claims 1 to 10, wherein the resin-treated spreaded fiber layer has a thickness of 100 µm to 300 µm.

12. A method for producing a unidirectional fiber tape, the method comprising:
impregnating the resin-treated spreaded fiber layer of any one of claims 1 to 16 with a second resin material to form the unidirectional fiber tape.

13. The method of claim 12, wherein the second resin material comprises polyethylene terephthalate (PET), a polycarbonate (PC), polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polysulfone sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof.

14. The method of any one of claims 12 or 13, wherein the resin-treated spreaded fiber layer is melt impregnated with the second resin material to form the unidirectional fiber tape

15. The method of any one of claims 12 to 14, wherein the unidirectional fiber tape has a thickness of 70 µm to 300 µm.
